# EUROPEAN PATENT APPLICATION

(11) **EP 4 696 124 A1**
(43) Date of publication of application: **18.02.2026**
(21) Application number: 24825284.3
(22) Date of filing: 20.06.2024
(51) Int. Cl.: A01D 34/66

(54) **STAND-ON MOWER**

(30) Priority: 20.06.2023 CN 202310755611; 13.06.2024 CN 202410763578; 13.06.2024 CN 202410764618; 13.06.2024 CN 202421349520 U
(71) Applicant: Nanjing Chervon Industry Co., Ltd., Nanjing, Jiangsu 211106 (CN)
(72) Inventor: GAO, Ming, Nanjing, Jiangsu 211106 (CN); YAMAOKA, Toshinari, Nanjing, Jiangsu 211106 (CN); LI, Li, Nanjing, Jiangsu 211106 (CN)
(74) Representative: Sun, Yiming
(86) International application number: PCT/CN2024/100267
(87) International publication number: WO 2024/260396

(57) **Abstract**

Provided is a stand-on mower. The stand-on mower includes: a mowing assembly including a mowing element for implementing a mowing function; a support portion configured to support a user; a central control mechanism including a station configured for the user to operate to control the stand-on mower; a traveling assembly including front traveling wheels and rear traveling wheels; a drive assembly including at least a first electric motor configured to drive the traveling assembly; and a power supply device configured to supply power to at least the first electric motor and including multiple battery packs, where at least one of the multiple battery packs is detachably mounted to a battery compartment. The ratio of the distance L1 between the power supply device and a front axle of the front traveling wheels to the distance L2 between the power supply device and a rear axle of the rear traveling wheels is greater than or equal to 0.15 and less than or equal to 2.

## Description

This application claims priority to Chinese Patent Application No. 202310755611.6 filed with the China National Intellectual Property Administration (CNIPA) on Jun. 20, 2023, Chinese Patent Application No. 202410763578.6 filed with the CNIPA on Jun. 13, 2024, Chinese Patent Application No. 202410764618.9 filed with the CNIPA on Jun. 13, 2024, and Chinese Patent Application No. 202421349520.9 filed with the CNIPA on Jun. 13, 2024, the disclosures of which are incorporated herein by reference in their entireties.

### TECHNICAL FIELD

The present application relates to the field of garden tools, for example, a stand-on mower.

### BACKGROUND

The mower is also referred to as a weeder, a grass mower, a lawn trimmer, or the like. The mower is a mechanical tool for trimming lawns, vegetation, and the like. The mower is composed of a cutting deck, a power source, traveling wheels, a traveling mechanism, a blade, an armrest, and a control part. In the mower in the related art, an electric motor is usually used as the power source, and larger torque is outputted through conversion performed by a reduction box, thereby satisfying working requirements. However, the electric motor is powered by the battery pack, and to satisfy the working requirements of the mower, the selected battery pack is relatively heavy. Due to the larger space occupied by the electric motor, the reduction box, and the standing position for the operator, the available mounting positions for the battery pack are relatively limited, easily leading to the problem of the center of gravity shifting forward and thus affecting steering flexibility and slope climbing stability.

This part provides background information related to the present application, and the background information is not necessarily the existing art.

### SUMMARY

The present application provides a stand-on mower, which features easy removal of the battery pack and good stability during traveling.

The example of the present application provides a stand-on mower. The stand-on mower includes a mowing assembly including a mowing element for implementing a mowing function; a support portion configured to support a user; a central control mechanism including a station configured for the user to operate to control the stand-on mower; a traveling assembly including front traveling wheels and rear traveling wheels; a drive assembly including at least a first electric motor configured to drive the traveling assembly; and a power supply device configured to supply power to at least the first electric motor and including multiple battery packs, where at least one of the multiple battery packs is detachably mounted to a coupling portion of the stand-on mower. The ratio of the distance L1 between the power supply device and a front axle of the front traveling wheels to the distance L2 between the power supply device and a rear axle of the rear traveling wheels is greater than or equal to 0.15 and less than or equal to 2.

In some examples, the ratio of the distance L1 between the power supply device and the front traveling wheels to the distance L2 between the power supply device and the rear traveling wheels is greater than or equal to 0.5 and less than or equal to 1.5.

In some examples, the distance L1 between the power supply device and the front axle is greater than or equal to 80 mm and less than or equal to 400 mm.

In some examples, the multiple battery packs are arranged in a row along a front and rear direction, and the dimension of a battery pack of the multiple battery packs in a left and right direction is greater than the dimension of the battery pack in the front and rear direction.

In some examples, the multiple battery packs are arranged in a row along a left and right direction, and the dimension of a battery pack of the multiple battery packs in the left and right direction is less than the dimension of the battery pack in a front and rear direction.

In some examples, the coupling portion includes a battery compartment, one battery compartment is provided, and the multiple battery packs are disposed in the one battery compartment.

In some examples, the coupling portion includes battery compartments, and the number of the battery compartments is the same as the number of the multiple battery packs.

In some examples, the coupling portion includes a battery compartment provided with an input terminal.

In some examples, the coupling portion includes a battery compartment provided with a locking structure.

In some examples, the coupling portion includes a battery compartment provided with a socket, and the battery pack further includes a plug that mates with the socket.

In some examples, the weight of the power supply device is greater than or equal to 17 kg and less than or equal to 90 kg.

In some examples, the number of the multiple battery packs in the power supply device is greater than or equal to 1 and less than or equal to 4.

In some examples, at least one of the multiple battery packs includes lithium iron phosphate (LFP) cells, and the capacity of at least one of the multiple battery packs is greater than or equal to 17 Ah and less than or equal to 90 Ah.

In some examples, the drive assembly includes a second electric motor for driving the mowing element, and the power supply device is capable of supplying power to the second electric motor.

In some examples, the volume of at least one of the multiple battery packs is greater than or equal to 0.215 cubic meters and less than or equal to 0.25 cubic meters.

The example of the present application further provides a stand-on mower. The stand-on mower includes a mowing assembly including a mowing element for implementing a mowing function; a support portion configured to support a user; a central control mechanism including a station configured for the user to operate to control the stand-on mower; a traveling assembly including front traveling wheels having a front axle and rear traveling wheels having a rear axle, a drive assembly including at least a first electric motor configured to drive the traveling assembly; and a power supply device configured to supply power to at least the first electric motor and including multiple battery packs, where the multiple battery packs are detachably mounted to a coupling portion of the stand-on mower. The multiple battery packs are disposed between the front axle and the rear axle. One of the multiple battery packs is capable of being detachable from the stand-on mower to supply power to a power tool or an all-terrain vehicle.

In some examples, the distance L1 between the power supply device and the front axle is greater than or equal to 80 mm and less than or equal to 400 mm; and the distance L2 between the power supply device and the rear axle is greater than or equal to 200 mm and less than or equal to 520 mm.

In some examples, the power supply device is disposed on a front side of the first electric motor.

In some examples, projections of the multiple battery packs on a support plane and a projection of a chassis on the support plane at least partially overlap.

In some examples, the power tool includes at least one of a garden tool, a handheld power tool, a hand-push power tool, or a drilling tool.

In some examples, the volume of at least one of the multiple battery packs is greater than or equal to 0.215 cubic meters and less than or equal to 0.25 cubic meters.

In some examples, the nominal voltage of at least one of the multiple battery packs in the power supply device is greater than or equal to 40 V and less than or equal to 80 V.

In some examples, the total capacity of the power supply device is greater than or equal to 17 Ah and less than or equal to 400 Ah.

In some examples, the distance L4 between the center of gravity G of the stand-on mower and the rear axle is greater than or equal to 750 mm and less than or equal to 1000 mm; and the overall length L of the stand-on mower is greater than or equal to 1500 mm and less than or equal to 1800 mm.

In some examples, the stand-on mower has a support plane configured to support the stand-on mower on the ground, and the distance H between the power supply device and the support plane is less than or equal to 600 mm.

The example of the present application further provides a stand-on mower. The stand-on mower includes: a mowing assembly including a mowing element for implementing a mowing function; a support portion configured to support a user; a central control mechanism including a station configured for the user to operate to control the stand-on mower; a traveling assembly including front traveling wheels and rear traveling wheels; a drive assembly including a first electric motor configured to drive the traveling assembly; a first power supply device including at least one first battery pack disposed at a first position, where the at least one first battery pack is configured to supply power to the first electric motor; and a second power supply device including at least one second battery pack disposed at a second position, where the capacity of the first battery pack is greater than the capacity of the second battery pack, and the at least one second battery pack is configured to be detachable to supply power to another power tool. In the front and rear direction, the distance L5 between the first battery pack and the second battery pack is greater than or equal to 70 mm and less than or equal to 500 mm.

In some examples, in the front and rear direction, the distance L5 between the first battery pack and the second battery pack is greater than or equal to 77 mm and less than or equal to 470 mm.

In some examples, the second power supply device includes multiple second battery packs that are separated.

In some examples, the multiple second battery packs are disposed on two sides of the station.

In some examples, the multiple second battery packs are disposed on a lower side of the station.

In some examples, in an up and down direction, the lowest point of the first power supply device is not higher than the lowest point of the second power supply device.

In some examples, the capacity of the first battery pack is greater than or equal to 17 Ah and less than or equal to 90 Ah; and the capacity of the second battery pack is greater than or equal to 5 Ah and less than or equal to 12 Ah.

In some examples, the first power supply device is capable of charging the second power supply device.

In some examples, the second power supply device is capable of charging the first power supply device.

In some examples, the first power supply device is disposed on a front side of the first electric motor, and the at least one first battery pack is at least partially disposed on a front side of the at least one second battery pack.

In some examples, the ratio of the distance L1 between the first power supply device and the front traveling wheels to the distance L2 between the first power supply device and the rear traveling wheels is greater than or equal to 0.15 and less than or equal to 2.

In some examples, the number of the at least one second battery pack is less than or equal to 4.

In some examples, the volume of the second battery pack is greater than or equal to 2350 cubic centimeters and less than or equal to 2800 cubic centimeters.

In some examples, the at least one first battery pack is configured to be detachable to supply power to another garden tool.

The example of the present application further provides a stand-on mower. The stand-on mower includes: a mowing assembly including a mowing element for implementing a mowing function; a support portion configured to support a user; a central control mechanism including a station configured for the user to operate to control the stand-on mower; a traveling assembly including front traveling wheels and rear traveling wheels; a drive assembly including a first electric motor configured to drive the traveling assembly; a first power supply device including at least one first battery pack disposed at a first position, where the at least one first battery pack is configured to supply power to the first electric motor; and a second power supply device including at least one second battery pack disposed at a second position, where the capacity of the first battery pack is greater than the capacity of the second battery pack, and the at least one second battery pack is configured to be detachable to supply power to another power tool. The at least one first battery pack is at least partially disposed on a front side of the at least one second battery pack. In a front and rear direction, the at least one first battery pack is disposed between a front axle and a rear axle.

In some examples, the first battery pack includes LFP cells, and the second battery pack includes at least ternary lithium cells.

In some examples, the at least one first battery pack is configured to be detachable to supply power to another garden tool.

In some examples, the capacity of the first battery pack is greater than or equal to 17 Ah and less than or equal to 90 Ah; and the capacity of the second battery pack is greater than or equal to 5 Ah and less than or equal to 12 Ah.

The example of the present application provides a stand-on mower. The stand-on mower includes: a mowing assembly including a mowing element for implementing a mowing function; a support portion configured to support a user; a central control mechanism including a station configured for the user to operate to control the stand-on mower; a traveling assembly including front traveling wheels and rear traveling wheels; a drive assembly including a first electric motor configured to drive the traveling assembly; a first power supply device including at least one first battery pack disposed at a first position, where the at least one first battery pack is configured to supply power to the first electric motor; and a second power supply device including at least one second battery pack disposed at a second position, where the capacity of the first battery pack is greater than the capacity of the second battery pack, and the at least one second battery pack is configured to be detachable to supply power to another power tool. In a front and rear direction, the distance L5 between the first battery pack and the second battery pack is less than or equal to 1000 mm.

In some examples, the capacity of the first battery pack is greater than or equal to 17 Ah and less than or equal to 90 Ah; and the capacity of the second battery pack is greater than or equal to 5 Ah and less than or equal to 12 Ah.

In some examples, multiple second battery packs are disposed on two sides of the station.

The example of the present application further provides a stand-on mower. The stand-on mower includes: a mowing assembly including a mowing element for implementing a mowing function; a support portion configured to support a user; a central control mechanism including a station configured for the user to operate to control the stand-on mower; a traveling assembly including front traveling wheels and rear traveling wheels and configured to support the stand-on mower to travel on the ground plane; a drive assembly including a first electric motor configured to drive the traveling assembly; a power supply device configured to be capable of supplying power to the first electric motor and including multiple battery packs; and a power management system configured to manage the power supply device and including a power management board, where in the front and rear direction, the power management board is at least partially disposed between the support portion and the power supply device.

In some examples, in the front and rear direction, the distance L3 between the power management board and the rear axle of the rear traveling wheels is greater than or equal to 0 and less than or equal to 250 mm.

In some examples, a control box is further included, the control box is used for mounting the power management board, and the control box is mounted near the central control mechanism.

In some examples, a driver circuit board configured to drive the first electric motor is further included, and the driver circuit board is located outside the control box.

In some examples, a second driver circuit board configured to drive the mowing assembly is further included, and the second driver circuit board is located inside the control.

In some examples, a second power supply device is further included, the second power supply device includes at least two second battery packs, and in the left and right direction, the power management board is disposed between the two second battery packs.

In some examples, the second battery packs are detachably mounted to the stand-on mower.

In some examples, an included angle α between the power management board and the plane where the chassis is located is greater than or equal to 10 degrees and less than or equal to 70 degrees.

In some examples, the battery pack has LFP cells, and the second battery pack has ternary lithium cells.

The example of the present application further provides a stand-on mower. The stand-on mower includes: a mowing assembly including a mowing element for implementing a mowing function; a support portion configured to support a user; a central control mechanism including a station configured for the user to operate to control the stand-on mower; a traveling assembly including front traveling wheels and rear traveling wheels; a drive assembly including at least a first electric motor configured to drive the traveling assembly; a power supply device configured to be capable of supplying power to at least the first electric motor and including multiple battery packs; and a power management system configured to manage the power supply device and including a power management board, where in the front and rear direction, the distance L3 between the power management board and the real axle of the rear traveling wheels is greater than or equal to 0 and less than or equal to 300 mm.

In some examples, the power management board extends along a horizontal direction or a vertical direction, or the power management board is inclined.

In some examples, a control box and a driver circuit board disposed inside the control box are further included, and the power management board is configured to be disposed inside the control box.

### BRIEF DESCRIPTION OF DRAWINGS

FIG. 1 is a perspective view of a stand-on mower according to an example of the present application.
FIG. 2 is a left side view of a stand-on mower according to an example of the present application.
FIG. 3 is a bottom view of a stand-on mower according to an example of the present application.
FIG. 4 is a schematic view illustrating the mounting position of a power supply device of a stand-on mower according to an example of the present application.
FIG. 5A is a schematic view illustrating the arrangement of battery packs of the power supply device in FIG. 4 according to an example.
FIG. 5B is a schematic view illustrating the arrangement of battery packs of the power supply device in FIG. 4 according to another example.
FIG. 6 is a right side view of a stand-on mower according to an example of the present application.
FIG. 7 is a top view of a stand-on mower according to another example of the present application.
FIG. 8 is a schematic view of a power management system of a stand-on mower according to an example of the present application.
FIG. 9 is a schematic view of an inclined power management board of the power management system in FIG. 8.
FIG. 10 is a schematic view of a power supply platform of a first battery pack according to the present application.
FIG. 11 is a perspective view of a stand-on mower according to another example of the present application.
FIG. 12 is a perspective view of the stand-on mower in FIG. 11 from another perspective.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

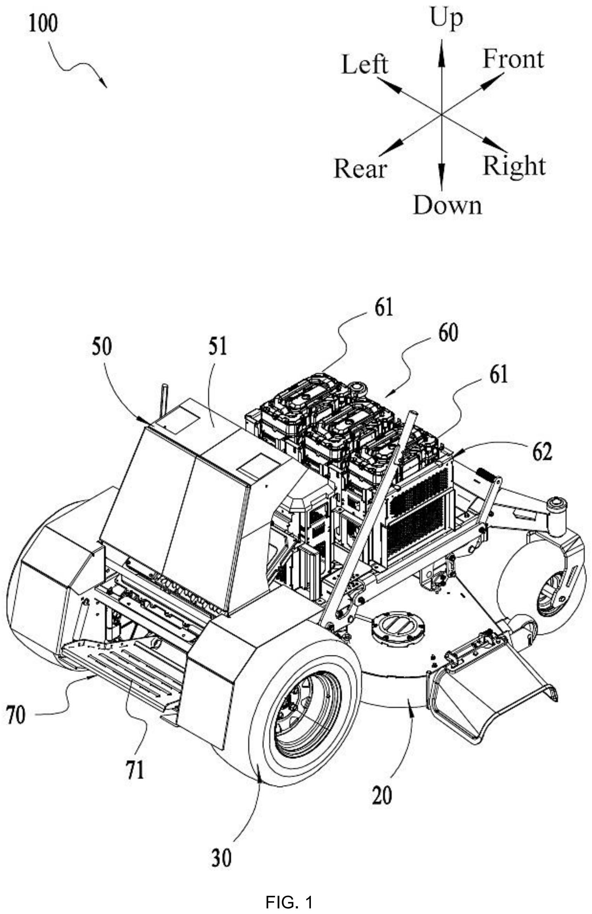

FIG. 1 shows a stand-on mower 100 as a specific example of the present application. The stand-on mower 100 may be operated by the user standing on it to mow the lawn and other vegetation. In the specification, front, rear, left, right, up, and down are described as directions shown in FIG. 1. For example, when the user is carried on the stand-on mower 100 located on the ground, a direction that the user faces is defined as the front, a direction on the back of the user is defined as the rear, a direction on a left-hand side of the user is defined as the left, a direction on a right-hand side of the user is defined as the right, a direction towards the ground is defined as down, and a direction away from the ground is defined as up.

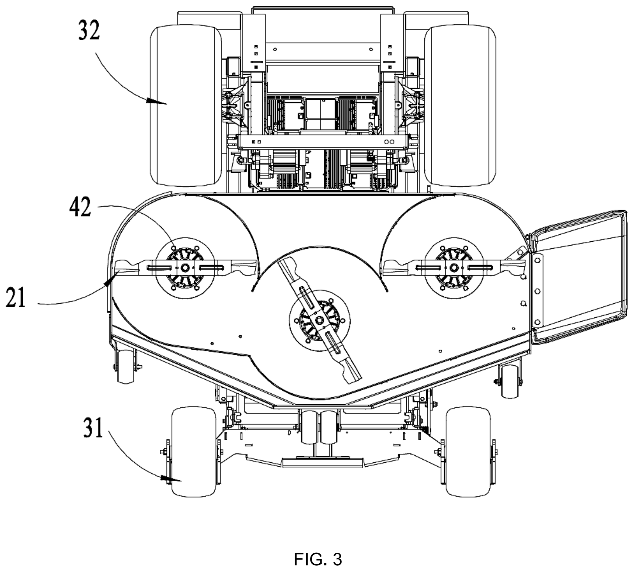

Referring to FIGS. 1 to 4, the stand-on mower 100 includes a vehicle frame 10, a mowing assembly 20 mounted on the vehicle frame 10, a traveling assembly 30, a drive assembly, a central control mechanism 50, a power supply device 60, and a support mechanism 70.

The traveling assembly 30 includes a pair of front traveling wheels 31 and a pair of rear traveling wheels 32. Optionally, the front traveling wheels 31 are configured to be omni wheels, and the drive assembly drives the rear traveling wheels 32 to rotate. The front traveling wheels 31 and the rear traveling wheels 32 rotate about a front wheel axis 31a and a rear wheel axis 32a, respectively. In other examples, the rear traveling wheels 32 may be configured to be omni wheels. In this case, a drive assembly 40 drives the front traveling wheels 31 to rotate.

The mowing assembly 20 includes a mowing element 21 for implementing a mowing function. Optionally, the mowing assembly 20 is mounted at the bottom of the vehicle frame 10 and located between the front traveling wheels 31 and the rear traveling wheels 32.

The drive assembly 40 is configured to drive the traveling assembly 30 and the mowing assembly 20 to operate. Optionally, the drive assembly includes a first electric motor 41 configured to drive the traveling assembly 30 to operate and a second electric motor 42 configured to drive the mowing assembly 20 to operate. In some examples, one or more first electric motors 41 are provided, or one or more second electric motors 42 are provided. In some examples, the first electric motor may be a hub motor or a wheel-side motor.

The central control mechanism 50 includes a station 51 configured for the user to operate to control the stand-on mower 100.

The support mechanism 70 includes a support portion configured to support the user. Optionally, the support portion is a standing portion 71. The standing portion 71 is disposed at the rear of the vehicle frame 10, connected to the vehicle frame 10, and located between the two rear traveling wheels 32. In some examples, in the left and right direction, the standing portion 71 is partially located between the two rear traveling wheels 32. In the front and rear direction, the standing portion 71 is partially located between the front wheel axis 31a of the front traveling wheels 31 and the rear wheel axis 32a of the rear traveling wheels 32. In this manner, when the user stands on the standing portion 71, the center of gravity of the human body is located on the rear wheel axis 32a of the rear traveling wheels 32 of the stand-on mower 100. The standing portion 71 moves forward, and the center of gravity of the human body also moves forward accordingly so that no matter whether the mower is climbing a slope or passing over bumpy ground, safety can be ensured and a rollover is less likely to happen.

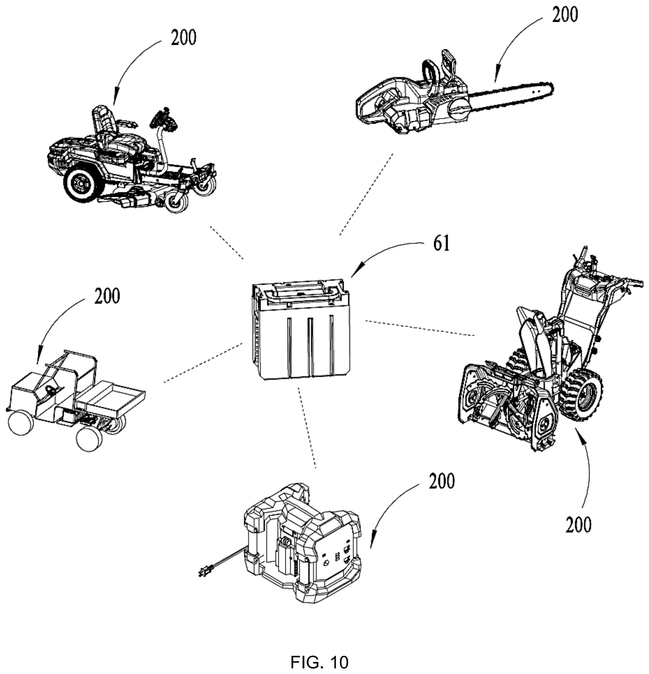

The power supply device 60 includes multiple battery packs 61 configured to supply power to at least the first electric motor 41 or the second electric motor 42. At least one of the multiple battery packs 61 is detachably mounted to a coupling portion of the stand-on mower 100. In some examples, the coupling portion includes a battery compartment 62. Optionally, the multiple battery packs 61 are configured to be detachable from the stand-on mower 100 to supply power to a power tool or an all-terrain vehicle. For example, FIG. 10 shows a power supply platform of the battery pack. It is to be understood that the battery pack can supply power to power tools 200 on the power supply platform. Optionally, the power tools 200 may be garden tools, such as a string trimmer, a blower, a push mower, and a riding mower. The power tools 200 may be handheld power tools, such as a string trimmer, a snow thrower, and a push mower. The power tools 200 may be hand-push power tools, such as a push snow thrower and a push mower. The power tools may be drilling tools, sawing tools, or electric garden tools.

In some examples, one battery compartment 62 is provided, and the multiple battery packs 61 are disposed in the one battery compartment 62. Optionally, the number of battery compartments 62 is the same as the number of battery packs 61, and each battery pack 61 is disposed in its corresponding battery compartment 62. Optionally, multiple battery compartments 62 and multiple battery packs 61 are provided, and two or more battery packs 61 are disposed in at least one of the multiple battery compartments 62. In some examples, the battery compartment 62 is provided with an input terminal configured to transmit an electrical signal or a communication signal. In some examples, the battery compartment 62 is further provided with a locking structure configured to lock the battery pack into the battery compartment 62, preventing poor contact between the battery pack 61 and the battery compartment 62 that affects the normal operation of the vehicle.

In some examples, the battery compartment 62 is provided with a socket, and the battery pack 61 includes a plug that mates with the socket. After the battery pack 61 is placed in the battery compartment 62, the plug is inserted into the socket to achieve an electrical connection between the battery pack 61 and the battery compartment 62. In some examples, multiple through holes are provided on a surface of the battery compartment 62, reducing the weight of the battery compartment 62 while the strength of the battery compartment 62 is ensured, so that the whole machine is reduced in weight, and the heat dissipation efficiency of the battery pack can be improved.

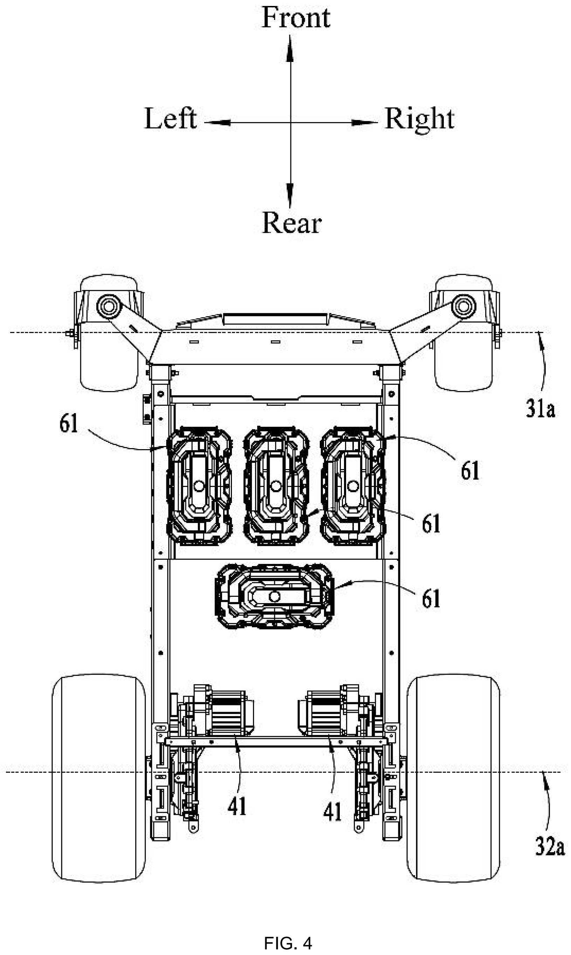

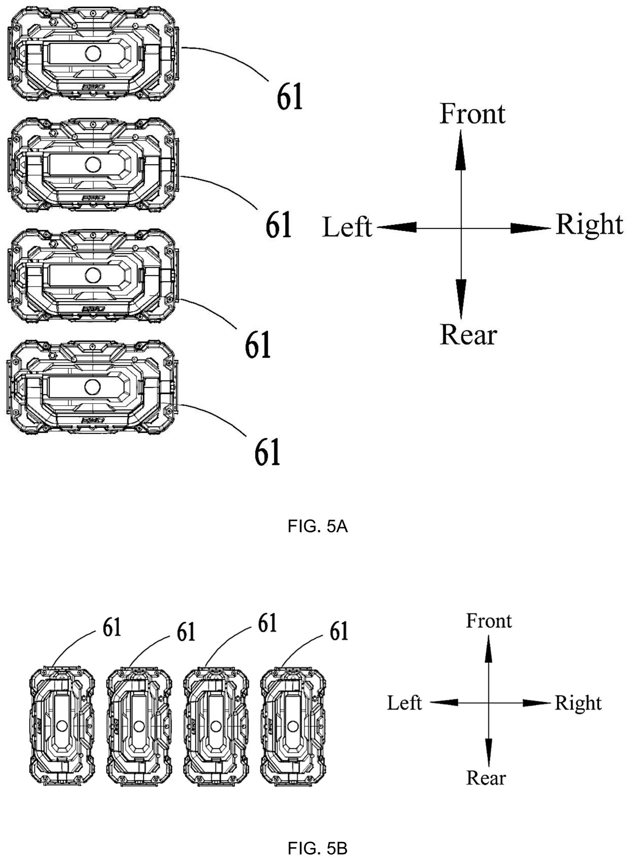

In some examples, as shown in FIG. 4, the power supply device 60 is disposed on the front side of the first electric motors 41 in the front and rear direction. In some examples, the power supply device 60 is disposed between the front wheel axis 31a and the rear wheel axis 32a in the front and rear direction. When the first electric motors 41 are hub motors, the power supply device 60 can be completely disposed between the two hub motors in the left and right direction. Optionally, the power supply device 60 includes multiple battery packs 61. Optionally, the multiple battery packs may be arranged in other manners. As shown in FIG. 5A, the multiple battery packs 61 are arranged in a row along the front and rear direction. When the multiple battery packs 61 are arranged in a row in sequence along the front and rear direction, the dimension of the battery pack 61 in the left and right direction is greater than the dimension of the battery pack 61 in the front and rear direction. Optionally, as shown in FIG. 5B, the multiple battery packs 61 are arranged in a row along the left and right direction. For example, when the multiple battery packs 61 are arranged in a row in sequence along the left and right direction, the dimension of the battery pack 61 in the left and right direction is less than the dimension of the battery pack 61 in the front and rear direction.

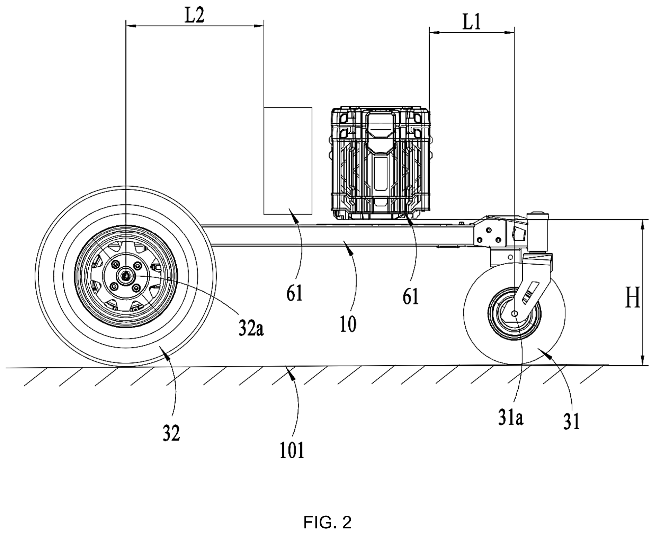

In some examples, as shown in FIG. 2, in the front and rear direction, the distance L1 between the power supply device 60 and the front wheel axis 31a is greater than or equal to 80 mm and less than or equal to 400 mm. In some examples, the distance L1 between the power supply device 60 and the front wheel axis 31a is greater than or equal to 100 mm and less than or equal to 300 mm. In some examples, the distance L1 between the power supply device 60 and the front wheel axis 31a is greater than or equal to 150 mm and less than or equal to 250 mm. In some examples, the distance L1 between the power supply device 60 and the front wheel axis 31a may be 80 mm, 90 mm, 100 mm, 120 mm, 140 mm, 160 mm, 180 mm, 200 mm, 240 mm, 280 mm, 320 mm, 360 mm, or 400 mm.

In some examples, as shown in FIG. 2, in the front and rear direction, the distance L2 between the power supply device 60 and the rear wheel axis 32a is greater than or equal to 200 mm and less than or equal to 520 mm. In some examples, in the front and rear direction, the distance L2 between the power supply device 60 and the rear wheel axis 32a is greater than or equal to 260 mm and less than or equal to 500 mm. In some examples, in the front and rear direction, the distance L2 between the power supply device 60 and the rear wheel axis 32a is greater than or equal to 300 mm and less than or equal to 400 mm. In some examples, in the front and rear direction, the distance L2 between the power supply device 60 and the rear wheel axis 32a is greater than or equal to 320 mm and less than or equal to 360 mm.

In some examples, the ratio of the distance L1 between the power supply device 60 and the front wheel axis 31a of the front traveling wheels 31 to the distance L2 between the power supply device 60 and the rear wheel axis 32a of the rear traveling wheels 32 is greater than or equal to 0.15 and less than or equal to 2. In some examples, the ratio of the distance L1 between the power supply device 60 and the front wheel axis 31a of the front traveling wheels 31 to the distance L2 between the power supply device 60 and the rear wheel axis 32a of the rear traveling wheels 32 is greater than or equal to 0.5 and less than or equal to 1.5. In some examples, the preceding ratio may include 0.15, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, and 2.0.

In some examples, the stand-on mower 100 has a support surface 101 configured to support the stand-on mower 100 on the ground. The distance H between the power supply device 60 and the support plane 101 is less than or equal to 600 mm. In some examples, the distance H between the power supply device 60 and the support plane 101 is less than or equal to 500 mm. In some examples, the distance H between the power supply device 60 and the support plane 101 is less than or equal to 400 mm. In some examples, the projection of the power supply device 60 on the support plane 101 and the projection of the chassis on the support plane 101 at least partially overlap. In this manner, by reasonably lowering the battery pack and setting the center of gravity of the battery pack, the stability of the vehicle during movement is improved.

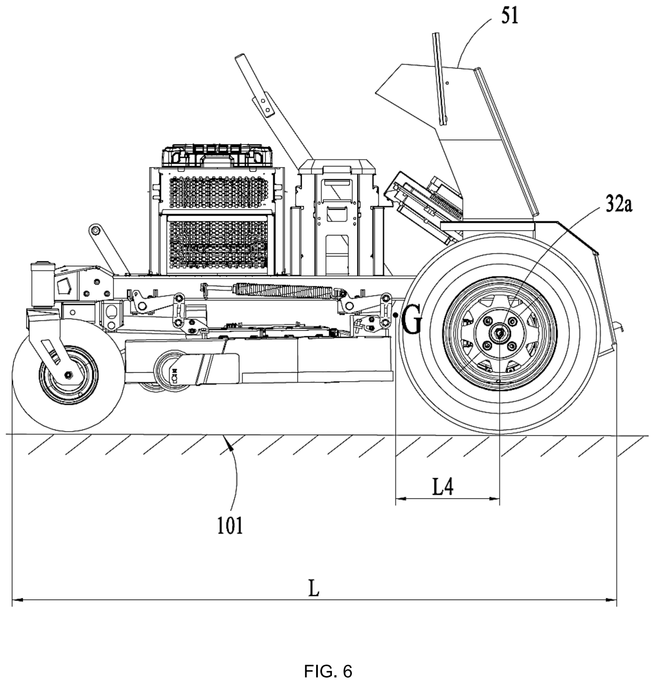

In some examples, as shown in FIG. 6, the distance L4 between the center of gravity G of the stand-on mower 100 and the rear wheel axis 32a is greater than or equal to 260 mm and less than or equal to 510 mm. In some examples, the distance L4 between the center of gravity G of the stand-on mower 100 and the rear wheel axis 32a is greater than or equal to 750 mm and less than or equal to 1000 mm. Optionally, the distance L4 between the center of gravity G of the stand-on mower 100 and the rear wheel axis 32a is greater than or equal to 800 mm and less than or equal to 900 mm. Optionally, the distance L4 between the center of gravity G of the stand-on mower 100 and the rear wheel axis 32a may be 270 mm, 290 mm, 310 mm, 330 mm, 350 mm, 370 mm, 410 mm, 430 mm, 460 mm, 480 mm, or 500 mm.

In some examples, the distance from the center of gravity G to the support plane 101 is greater than or equal to 280 mm and less than or equal to 350 mm. Optionally, the distance from the center of gravity G to the support plane 101 may be 290 mm, 300 mm, 310 mm, 320 mm, 330 mm, or 340 mm.

In some examples, referring to FIG. 6, the overall length L of the stand-on mower 100 is greater than or equal to 1500 mm and less than or equal to 1800 mm. Optionally, the overall length L of the stand-on mower 100 is greater than or equal to 1600 mm and less than or equal to 1700 mm. Optionally, the overall length L of the stand-on mower 100 may be 1550 mm, 1650 mm, or 1750 mm.

In some examples, the volume of at least one battery pack in the power supply device 60 is greater than or equal to 0.02 cubic meters and less than or equal to 0.03 cubic meters. Optionally, the volume of at least one battery pack in the power supply device 60 is greater than or equal to 0.021 cubic meters and less than or equal to 0.025 cubic meters. In some examples, the volume of at least one battery pack in the power supply device 60 is greater than or equal to 0.215 cubic meters and less than or equal to 0.25 cubic meters.

In some examples, the weight of at least one battery pack in the power supply device 60 is greater than or equal to 17 kg and less than or equal to 20 kg. Optionally, the weight of at least one battery pack in the power supply device 60 is greater than or equal to 18 kg and less than or equal to 19 kg. Optionally, the weight of at least one battery pack in the power supply device 60 may be 17.5 kg, 18.5 kg, or 19.5 kg.

In some examples, the nominal voltage of at least one battery pack in the power supply device 60 is greater than 40 V and less than or equal to 80 V. Optionally, the nominal voltage of the power supply device 60 may be 56 V or 64 V.

In some examples, the total capacity of the power supply device 60 is greater than or equal to 27 Ah and less than or equal to 400 Ah. In some examples, the power supply device 60 includes multiple battery packs 61, and the capacity of at least one of the multiple battery packs 61 is greater than or equal to 27 Ah and less than or equal to 90 Ah. Optionally, the capacity of the battery pack 61 is greater than or equal to 30 Ah and less than or equal to 80 Ah. Optionally, the capacity of the battery pack 61 is greater than or equal to 40 Ah and less than or equal to 70 Ah. Optionally, the capacity of the battery pack 61 is greater than or equal to 50 Ah and less than or equal to 60 Ah.

In some examples, the number of battery packs 61 is greater than or equal to 1 and less than or equal to 4. Optionally, the number of battery packs 61 is greater than or equal to 2 and less than or equal to 3. In some examples, the battery pack 61 includes LFP cells. In some examples, types of the battery pack include, but are not limited to, the LFP battery, the Sodium-ion battery, the solid-state/semi-solid-state battery, the 21700 battery, the 40135 battery, the 4680 battery, the 46950 battery, the 46120 battery, and the 35184 battery.

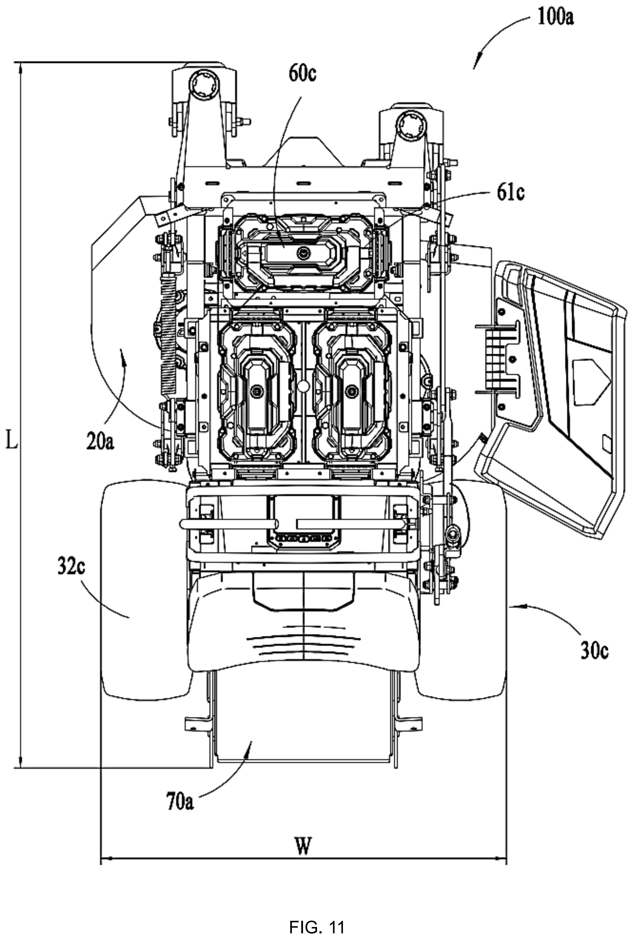

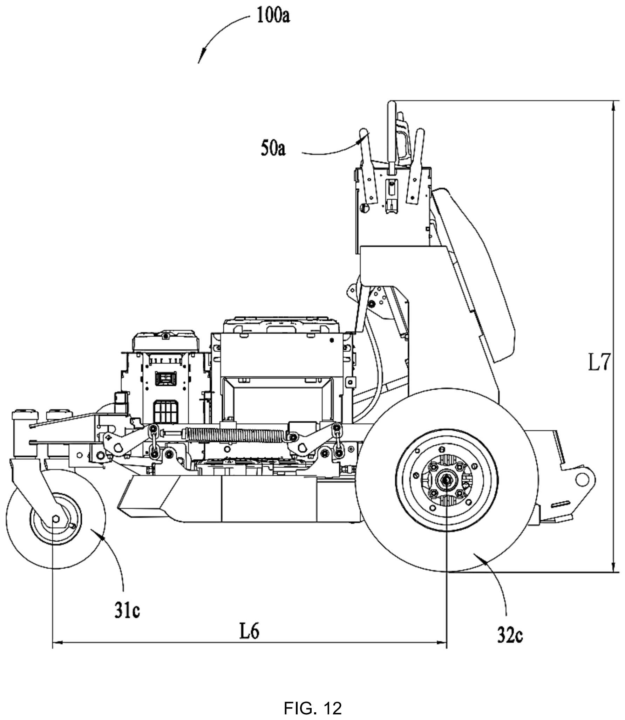

FIGS. 11 and 12 show another type of stand-on mower 100a. Compared with the preceding stand-on mower 100, a power supply device 60c of the stand-on mower 100a in this example includes three battery packs 61c. The battery pack 61c in this example may be equivalent to the battery pack 61a in the preceding example or may be the battery pack 61b in the preceding example. The stand-on mower 100a in this example further includes a mowing assembly 20a, a traveling assembly 30c, a central control mechanism 50a, a power supply device 60c, and a support mechanism 70a. The traveling assembly 30c includes two front wheels 31c and two rear wheels 32c. In this example, the axle distance L6 between the front wheels 31c and the rear wheels 32c is greater than or equal to 1000 mm and less than or equal to 1120 mm. Optionally, the axle distance L6 may be 1083 mm. In the front and rear direction, the length L of the stand-on mower 100a is greater than or equal to 1600 mm and less than or equal to 1800 mm. Optionally, the length L of the stand-on mower 100a may be 1700 mm. The height L7 of the stand-on mower 100a is greater than or equal to 1100 mm and less than or equal to 1200 mm. Optionally, the height L7 of the stand-on mower 100a may be 1175 mm. In the width direction, the maximum width W between the two rear wheels 32a is greater than or equal to 900 mm and less than or equal to 1000 mm. Optionally, the maximum width W between the two rear wheels 32a may be 940 mm.

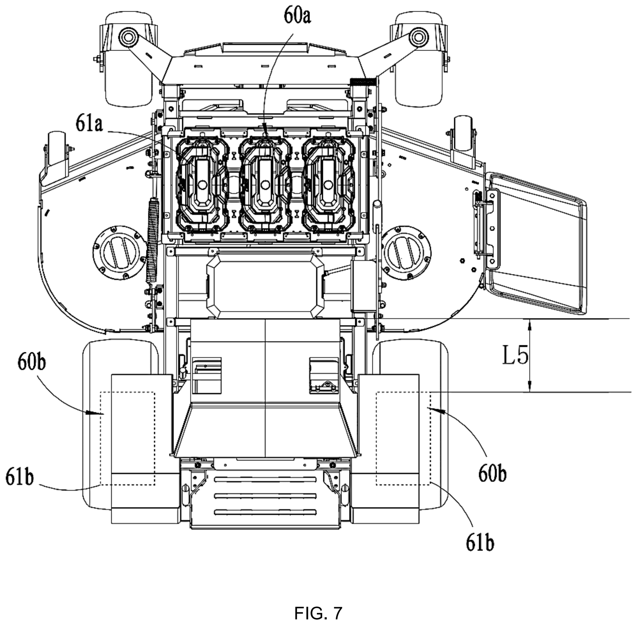

Referring to FIG. 7, different from the preceding example, the power supply device in the stand-on mower 100 includes a first power supply device 60a and a second power supply device 60b. It is to be noted that the first power supply device 60a in this example may be understood as the power supply device 60 in the preceding example. This example differs from the preceding example in that the second power supply device 60b different from the power supply device 60 is further provided. The relevant information of the first power supply device 60a in this example is similar to that of the power supply device 60 in the preceding example, and the vehicle frame 10, the mowing assembly 20 mounted on the vehicle frame 10, the traveling assembly 30, the drive assembly 40, the central control mechanism 50, and the support mechanism 70 in this example are basically similar to those in the preceding example. Next, the settings related to the first power supply device 60a and the second power supply device 60b in this example are described.

The first power supply device 60a is configured to supply power to at least the first electric motor 41. The first power supply device 60a includes first battery packs 61a disposed at a first position. The second power supply device 60b includes second battery packs 61b disposed at a second position. The capacity of the first battery pack 61a is greater than the capacity of the second battery pack 61b. Optionally, the first battery packs 61a are configured to supply power to at least the first electric motor 41. The second battery packs 61b are configured to be detachable to supply power to other power tools. The preceding power tools may be garden tools, such as a string trimmer, a blower, a push mower, and a riding mower. The power tools may be handheld power tools, such as a string trimmer, a snow thrower, and a push mower. The power tools may be hand-push power tools, such as a push snow thrower and a push mower. The power tools may be drilling tools, sawing tools, or electric garden tools.

Optionally, in the front and rear direction, the first battery packs 61a are disposed on the front side of the second battery packs 61b. The second battery packs 61b are mounted near the central control mechanism 50. For example, in the front and rear direction, the distance L5 between the first battery pack 61a and the second battery pack 61b is less than or equal to 1000 mm. Optionally, in the front and rear direction, the distance L5 between the first battery pack 61a and the second battery pack 61b is greater than or equal to 70 mm and less than or equal to 500 mm. In some examples, in the front and rear direction, the distance L5 between the first battery pack 61a and the second battery pack 61b is greater than or equal to 77 mm and less than or equal to 477 mm. In some examples, in the front and rear direction, the distance L5 between the first battery pack 61a and the second battery pack 61b is greater than or equal to 100 mm and less than or equal to 400 mm. In some examples, in the front and rear direction, the distance L5 between the first battery pack 61a and the second battery pack 61b may be 0 mm, which may be understood as that the first battery pack and the second battery pack at least partially overlap in the front and rear direction. In some examples, in the front and rear direction, the distance L5 between the first battery pack 61a and the second battery pack 61b may be 150 mm, 200 mm, 250 mm, 300 mm, 350 mm, 400 mm, 500 mm, 600 mm, 700 mm, 800 mm, or 900 mm.

Optionally, the second power supply device 60b includes multiple second battery packs 61b. For example, the number of second battery packs 61b is less than or equal to 4. Optionally, the number of second battery packs 61b is less than or equal to 2. The capacity of the second battery pack 61b is greater than or equal to 5 Ah and less than or equal to 12 Ah. The volume of the second battery pack 61b is greater than or equal to 2350 cubic centimeters and less than or equal to 3000 cubic centimeters. Optionally, the volume of the second battery pack 61b is greater than or equal to 2000 cubic centimeters and less than or equal to 2800 cubic centimeters.

Optionally, the multiple second battery packs 61b are separated from each other. In some examples, multiple second battery packs 61b are disposed on two sides of the station 51. In some examples, the second battery packs 61b are disposed on the lower side of the station 51. In some examples, in the front and rear direction, the first battery packs 61a are disposed on the front side of the second battery packs 61b. In some examples, in the front and rear direction, the second battery packs 61b are disposed on the front side of the first battery packs 61a. In some examples, in the up and down direction, the lowest point of the first power supply device 60a is not higher than the lowest point of the second power supply device 60b.

Optionally, the first power supply device 60a can charge the second power supply device 60b. In some other examples, the second power supply device 60b can charge the first power supply device 60a. The first battery pack 61a includes LFP cells. The second battery pack 61b includes ternary lithium cells.

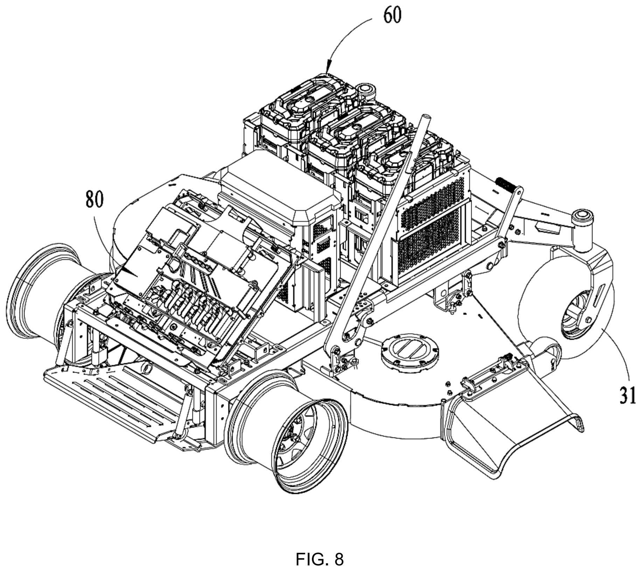

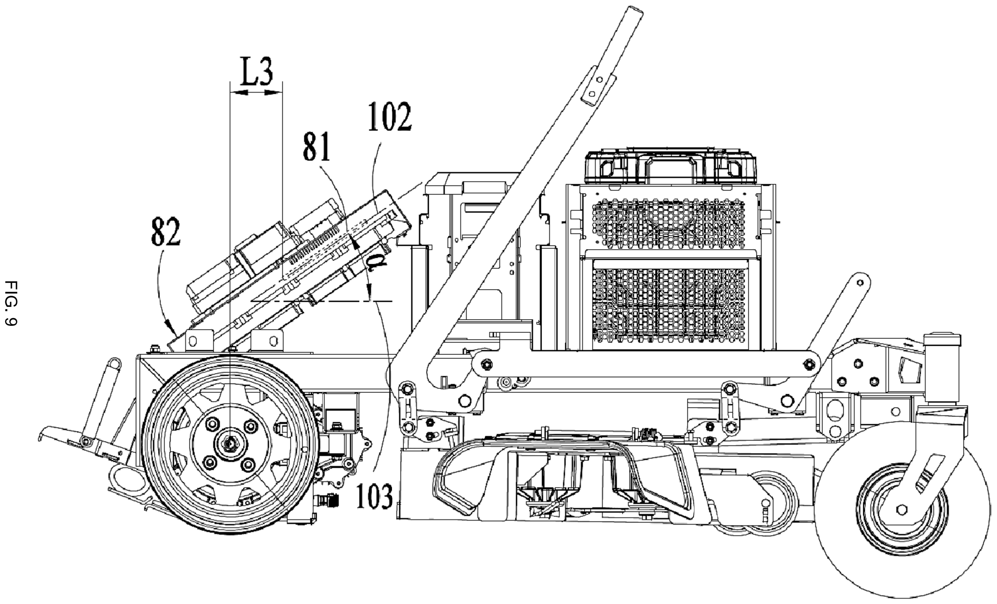

Referring to FIGS. 8 and 9, the stand-on mower 100 further includes a power management system. The power management system is configured to be a power management device. The power management system includes a power management board 81. Optionally, the power management board 81 is electrically connected to the power supply device and includes at least one controller configured to control a charging or discharging process of multiple battery packs in the power supply device.

Optionally, in the front and rear direction, the power management board 81 is disposed between the support portion and the front traveling wheels 31. Optionally, in the front and rear direction, the distance L3 between the power management board 81 and the rear axle is greater than or equal to 0 and less than or equal to 300 mm. Optionally, the distance L3 between the power management board 81 and the rear axle may be 50 mm, 100 mm, 150 mm, 200 mm, or 290 mm. It is to be noted that the distance L3 between the power management board 81 and the rear axle refers to the distance from the point of the power management board 81 closest to the rear axle in the front and rear direction to the rear axle.

Optionally, in the front and rear direction, the power management board 81 is at least partially disposed between the support portion and the power supply device 60. When the power supply device further includes the second power supply device 60b having at least two second battery packs, the power management board 81 is located between the two second battery packs in the left and right direction.

Optionally, the power management board 81 is mounted at the central control mechanism. In some examples, the power management board 81 extends along a horizontal direction or a vertical direction. In some examples, the power management board 81 is inclined. For example, the power management board 81 extends along a first plane 102, and an included angle α between the first plane 102 and a second plane 103 where the chassis is located is greater than 0 degrees and less than 90 degrees. Optionally, the included angle α between the first plane 102 and the second plane 103 where the chassis is located is greater than or equal to 10 degrees and less than or equal to 70 degrees. Optionally, the included angle α between the first plane 102 and the second plane 103 where the chassis is located is greater than or equal to 15 degrees and less than or equal to 55 degrees. Optionally, the included angle α between the first plane 102 and the second plane 103 where the chassis is located is greater than or equal to 30 degrees and less than or equal to 45 degrees. Optionally, the included angle α between the first plane 102 and the second plane 103 where the chassis is located may be equal to 10 degrees, 20 degrees, 30 degrees, 40 degrees, 50 degrees, 60 degrees, 80 degrees, or 90 degrees. The second plane 103 where the chassis is located may be understood as a plane that is parallel to the ground plane and supports the wheels. The preceding chassis may be understood as a part of the vehicle frame of the stand-on mower in the present application that extends along the front and rear direction.

Optionally, the stand-on mower 100 further includes a control mechanism 80, and the control mechanism 80 includes a control box 82. The control box 82 is used for mounting the power management board 81. For example, the control box 82 is mounted near the central control mechanism 50. The drive assembly 40 further includes a driver circuit board configured to control the first electric motor 41 and a second driver circuit board configured to drive the second electric motor 42. In some examples, the driver circuit board, the second driver circuit board, and the power management board 81 are all disposed inside the control box 82. In some examples, the power management board 81 is disposed inside the control box 82, and the driver circuit board is disposed outside the control box 82. In some examples, the power management board 81 is disposed inside the control box 82, and the second driver circuit board is disposed outside the control box 82.

In some examples, the control mechanism 80 includes the power management board configured to control the battery packs, the driver circuit boards configured to control the traveling electric motor and the mowing electric motor, a power conversion circuit configured to convert the power voltage, or other control circuits configured to control the operation of the stand-on mower. In this manner, the electric control mechanisms of the stand-on mower in this example are basically concentrated near the central control mechanism, thereby facilitating wiring. Optionally, the ratio of the width in the left and right direction to the width of the vehicle frame 10 in the left and right direction is greater than or equal to 0.6 and less than or equal to 1. The ratio of the width in the left and right direction to the width of the vehicle frame 10 in the left and right direction is greater than or equal to 0.7 and less than or equal to 0.8.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A stand-on mower, comprising:
a mowing assembly comprising a mowing element for implementing a mowing function;
a support portion supporting a user;
a central control mechanism comprising a station for the user to operate to control the stand-on mower;
a traveling assembly comprising front traveling wheels and rear traveling wheels;
a drive assembly comprising at least a first electric motor that drives the traveling assembly; and
a power supply device supplying power to at least the first electric motor and comprising a plurality of battery packs, at least one of the plurality of battery packs being detachably mounted to a coupling portion of the stand-on mower;
wherein a ratio of a distance L1 between the power supply device and a front axle of the front traveling wheels to a distance L2 between the power supply device and a rear axle of the rear traveling wheels is greater than or equal to 0.15 and less than or equal to 2.

2. The stand-on mower of claim 1, wherein the ratio of the distance L1 between the power supply device and the front traveling wheels to the distance L2 between the power supply device and the rear traveling wheels is greater than or equal to 0.5 and less than or equal to 1.5.

3. The stand-on mower of claim 1, wherein the distance L1 between the power supply device and the front axle is greater than or equal to 80 mm and less than or equal to 400 mm.

4. The stand-on mower of claim 1, wherein the plurality of battery packs are arranged in a row along a front and rear direction, and a dimension of a battery pack of the plurality of battery packs in a left and right direction is greater than a dimension of the battery pack in the front and rear direction.

5. The stand-on mower of claim 1, wherein the plurality of battery packs are arranged in a row along a left and right direction, and a dimension of a battery pack of the plurality of battery packs in the left and right direction is less than a dimension of the battery pack in a front and rear direction.

6. The stand-on mower of claim 1, wherein the coupling portion comprises a battery compartment, one battery compartment is provided, and the plurality of battery packs are disposed in the one battery compartment.

7. The stand-on mower of claim 1, wherein the coupling portion comprises battery compartments, and a number of the battery compartments is the same as a number of the plurality of battery packs.

8. The stand-on mower of claim 1, wherein the coupling portion comprises a battery compartment provided with an input terminal.

9. The stand-on mower of claim 1, wherein the coupling portion comprises a battery compartment provided with a locking structure.

10. The stand-on mower of claim 1, wherein the coupling portion comprises a battery compartment provided with a socket, and a battery pack of the plurality of battery packs further comprises a plug that mates with the socket.

11. The stand-on mower of claim 1, wherein a weight of the power supply device is greater than or equal to 17 kg and less than or equal to 90 kg.

12. The stand-on mower of claim 1, wherein a number of the plurality of battery packs in the power supply device is greater than or equal to 1 and less than or equal to 4.

13. The stand-on mower of claim 1, wherein at least one of the plurality of battery packs comprises lithium iron phosphate (LFP) cells, and a capacity of at least one of the plurality of battery packs is greater than or equal to 17 Ah and less than or equal to 90 Ah.

14. The stand-on mower of claim 1, wherein the drive assembly comprises a second electric motor that drives the mowing element, and the power supply device supplies power to the second electric motor.

15. The stand-on mower of claim 1, wherein a volume of at least one of the plurality of battery packs is greater than or equal to 0.215 cubic meters and less than or equal to 0.25 cubic meters.

16. A stand-on mower, comprising:
a mowing assembly comprising a mowing element for implementing a mowing function;
a support portion supporting a user;
a central control mechanism comprising a station for the user to operate to control the stand-on mower;
a traveling assembly comprising front traveling wheels having a front axle and rear traveling wheels having a rear axle;
a drive assembly comprising at least a first electric motor that drives the traveling assembly; and
a power supply device supplying power to at least the first electric motor and comprising a plurality of battery packs, the plurality of battery packs being detachably mounted to a coupling portion of the stand-on mower;
wherein the plurality of battery packs are disposed between the front axle and the rear axle, and one of the plurality of battery packs is detachable from the stand-on mower to supply power to a power tool or an all-terrain vehicle.

17. The stand-on mower of claim 16, wherein a distance L1 between the power supply device and the front is greater than or equal to 80 mm and less than or equal to 400 mm, and a distance L2 between the power supply device and the rear is greater than or equal to 200 mm and less than or equal to 520 mm.

18. The stand-on mower of claim 16, wherein the power supply device is disposed on a front side of the first electric motor.

19. The stand-on mower of claim 16, wherein projections of the plurality of battery packs on a support plane and a projection of a chassis on the support plane at least partially overlap.

20. The stand-on mower of claim 16, wherein the power tool comprises at least one of a garden tool, a handheld power tool, a hand-push power tool, or a drilling tool.

21. The stand-on mower of claim 16, wherein a volume of at least one of the plurality of battery packs is greater than or equal to 0.215 cubic meters and less than or equal to 0.25 cubic meters.

22. The stand-on mower of claim 16, wherein a nominal voltage of at least one of the plurality of battery packs in the power supply device is greater than or equal to 40 V and less than or equal to 80 V.

23. The stand-on mower of claim 16, wherein a total capacity of the power supply device is greater than or equal to 17 Ah and less than or equal to 400 Ah.

24. The stand-on mower of claim 16, wherein a distance L4 between a center of gravity G of the stand-on mower and the rear axle is greater than or equal to 750 mm and less than or equal to 1000 mm; and an overall length L of the stand-on mower is greater than or equal to 1500 mm and less than or equal to 1800 mm.

25. The stand-on mower of claim 16, wherein the stand-on mower has a support plane configured to support the stand-on mower on the ground, and a distance H between the power supply device and the support plane is less than or equal to 600 mm.

26. A stand-on mower, comprising:
a mowing assembly comprising a mowing element for implementing a mowing function;
a support portion configured to support a user;
a central control mechanism comprising a station configured for the user to operate to control the stand-on mower;
a traveling assembly comprising front traveling wheels and rear traveling wheels;
a drive assembly comprising a first electric motor configured to drive the traveling assembly;
a first power supply device comprising at least one first battery pack disposed at a first position, wherein the at least one first battery pack is configured to supply power to the first electric motor; and
a second power supply device comprising at least one second battery pack disposed at a second position, wherein a capacity of a first battery pack of the at least one first battery pack is greater than a capacity of a second battery pack of the at least one second battery pack, and the at least one second battery pack is configured to be detachable to supply power to another power tool;
wherein in a front and rear direction, a distance L5 between the first battery pack and the second battery pack is greater than or equal to 70 mm and less than or equal to 500 mm.

27. The stand-on mower of claim 26, wherein in the front and rear direction, the distance L5 between the first battery pack and the second battery pack is greater than or equal to 77 mm and less than or equal to 470 mm.

28. The stand-on mower of claim 26, wherein the second power supply device comprises a plurality of second battery packs that are separated.

29. The stand-on mower of claim 28, wherein the plurality of second battery packs are disposed on two sides of the station.

30. The stand-on mower of claim 28, wherein the plurality of second battery packs are disposed on a lower side of the station.

31. The stand-on mower of claim 26, wherein in an up and down direction, a lowest point of the first power supply device is not higher than a lowest point of the second power supply device.

32. The stand-on mower of claim 26, wherein the capacity of the first battery pack is greater than or equal to 17 Ah and less than or equal to 90 Ah; and the capacity of the second battery pack is greater than or equal to 5 Ah and less than or equal to 12 Ah.

33. The stand-on mower of claim 26, wherein the first power supply device is capable of charging the second power supply device.

34. The stand-on mower of claim 26, wherein the second power supply device is capable of charging the first power supply device.

35. The stand-on mower of claim 26, wherein the first power supply device is disposed on a front side of the first electric motor, and the at least one first battery pack is at least partially disposed on a front side of the at least one second battery pack.

36. The stand-on mower of claim 26, wherein a ratio of a distance L1 between the first power supply device and the front traveling wheels to a distance L2 between the first power supply device and the rear traveling wheels is greater than or equal to 0.15 and less than or equal to 2.

37. The stand-on mower of claim 26, wherein a number of the at least one second battery pack is less than or equal to 4.

38. The stand-on mower of claim 26, wherein a volume of the second battery pack is greater than or equal to 2350 cubic centimeters and less than or equal to 2800 cubic centimeters.

39. The stand-on mower of claim 26, wherein the at least one first battery pack is configured to be detachable to supply power to another garden tool.

40. A stand-on mower, comprising:
a mowing assembly comprising a mowing element for implementing a mowing function;
a support portion configured to support a user;
a central control mechanism comprising a station configured for the user to operate to control the stand-on mower;
a traveling assembly comprising front traveling wheels and rear traveling wheels;
a drive assembly comprising a first electric motor configured to drive the traveling assembly;
a first power supply device comprising at least one first battery pack disposed at a first position, wherein the at least one first battery pack is configured to supply power to the first electric motor; and
a second power supply device comprising at least one second battery pack disposed at a second position, wherein a capacity of a first battery pack of the at least one first battery pack is greater than a capacity of a second battery pack of the at least one second battery pack, and the at least one second battery pack is configured to be detachable to supply power to another power tool;
wherein the at least one first battery pack is at least partially disposed on a front side of the at least one second battery pack; and
in a front and rear direction, the at least one first battery pack is disposed between a front axle and a rear axle.

41. The stand-on mower of claim 40, wherein the first battery pack comprises lithium iron phosphate (LFP) cells, and the second battery pack comprises at least ternary lithium cells.

42. The stand-on mower of claim 40, wherein the at least one first battery pack is configured to be detachable to supply power to another garden tool.

43. The stand-on mower of claim 40, wherein the capacity of the first battery pack is greater than or equal to 17 Ah and less than or equal to 90 Ah; and the capacity of the second battery pack is greater than or equal to 5 Ah and less than or equal to 12 Ah.

44. A stand-on mower, comprising:
a mowing assembly comprising a mowing element for implementing a mowing function;
a support portion configured to support a user;
a central control mechanism comprising a station configured for the user to operate to control the stand-on mower;
a traveling assembly comprising front traveling wheels and rear traveling wheels;
a drive assembly comprising a first electric motor configured to drive the traveling assembly;
a first power supply device comprising at least one first battery pack disposed at a first position, wherein the at least one first battery pack is configured to supply power to the first electric motor; and
a second power supply device comprising at least one second battery pack disposed at a second position, wherein a capacity of a first battery pack of the at least one first battery pack is greater than a capacity of a second battery pack of the at least one second battery pack, and the at least one second battery pack is configured to be detachable to supply power to another power tool;
wherein in a front and rear direction, a distance L5 between the first battery pack and the second battery pack is less than or equal to 1000 mm.

45. The stand-on mower of claim 44, wherein the capacity of the first battery pack is greater than or equal to 17 Ah and less than or equal to 90 Ah; and the capacity of the second battery pack is greater than or equal to 5 Ah and less than or equal to 12 Ah.

46. The stand-on mower of claim 44, wherein a plurality of second battery packs are disposed on two sides of the station.
